# EUROPEAN PATENT APPLICATION

(11) **EP 4 329 108 A1**
(43) Date of publication of application: **28.02.2024**
(21) Application number: 22900214.2
(22) Date of filing: 07.11.2022
(51) Int. Cl.: H01R 13/631, H01M 50/50

(54) **CONNECTING DEVICE AND POWER CONSUMING DEVICE**

(30) Priority: 03.12.2021 CN 202123025423 U
(71) Applicant: Contemporary Amperex Technology Co., Limited, Ningde, Fujian 352100 (CN)
(72) Inventor: ZHOU, Cong, Ningde, Fujian 352100 (CN); HOU, Yuepan, Ningde, Fujian 352100 (CN); SU, Yu, Ningde, Fujian 352100 (CN)
(74) Representative: von Tietzen und Hennig, Nikolaus
(86) International application number: PCT/CN2022/130209
(87) International publication number: WO 2023/098409

(57) **Abstract**

A connecting device and an electricity-consuming apparatus are provided by the present application. The connecting device includes a first fixing member, a second fixing member and an elastic connecting assembly. The first fixing member and the second fixing member are configured to be fixedly connected to different devices respectively, and the first fixing member is movable relative to the second fixing member through the elastic connecting assembly. The elastic connecting assembly comprises an elastic member and a moving plate sandwiched between the first fixing member and the second fixing member in a first direction, the second fixing member is fixedly connected to the moving plate, at least one of the moving plate and the first fixing member is provided with a concave part formed by concaving inward in the first direction, and the elastic member is arranged at the concave part. The elastic member is configured to be compressible by the moving plate and the first fixing member in the first direction and movable in a second direction, so that the first fixing member is movable relative to the second fixing member in the first direction and the second direction, and the second direction is perpendicular to the first direction. The embodiments of the present application can allow for a certain mounting error and improve the mounting reliability.

## Description

### CROSS REFERENCE TO RELATED APPLICATION

This application claims priority to Chinese Patent Application No. 202123025423.3, titled "CONNECTING DEVICE AND ELECTRICITY-CONSUMING APPARATUS" and filed on December 03, 2021, which is hereby incorporated by reference in its entirety.

### TECHNICAL FIELD

The present application relates to the technical field of connecting members, and in particular to a connecting member and an electricity-consuming apparatus.

### BACKGROUND

The energy conservation and emission reduction are keys to the sustainable development of the automotive industry, and an electric vehicle has become an important component of the sustainable development of the automotive industry due to its advantages in energy conservation and environmental protection. For the electric vehicle, the battery technology is also an important factor related to the development of the electric vehicle.

Generally, a battery needs to be mounted onto a corresponding electricity-consuming apparatus to facilitate supplying electric power to the battery. However, due to various factors, the mounting error between the battery and the electricity-consuming apparatus is prone to occur, which may affect the normal use of the battery.

### SUMMARY

In view of the above problem, the present application provides a connecting device and an electricity-consuming apparatus that can allow for a certain degree of mounting error and improve the reliability.

In an aspect, embodiments of the present application provide a connecting device including a first fixing member, a second fixing member and an elastic connecting assembly. The first fixing member and the second fixing member are configured to be fixedly connected to different devices respectively, and the first fixing member is disposed movably relative to the second fixing member through the elastic connecting assembly.

The elastic connecting assembly includes an elastic member and a moving plate sandwiched between the first fixing member and the second fixing member in a first direction, the second fixing member is fixedly connected to the moving plate, at least one of the moving plate and the first fixing member is provided with a concave part formed by concaving inward in the first direction, and the elastic member is arranged at the concave part. The elastic member is configured to be compressible by the moving plate and the first fixing member in the first direction and movable in a second direction, so that the first fixing member is movable relative to the second fixing member in the first direction and the second direction, and the second direction is perpendicular to the first direction.

The embodiments of the present application provide the connecting device to achieve a floating connection between the first fixing member and the second fixing member through the elastic member, so that the first fixing member can move relative to the second fixing member in the first direction and the second direction. At the same time, the elastic member can absorb a relative force generated by the deviation between the first fixing member and the moving plate, allow for a certain mounting error between the first fixing member and the moving plate, and improve the mounting reliability.

In some embodiments, at least a portion of the elastic member is located in the concave part, and the maximum size of the at least a portion of the elastic member in the second direction is smaller than a minimum size of the concave part in the second direction, so that the first fixing member is movable relative to the second fixing member in the second direction.

The elastic member in the embodiments of the present application can move in the concave part in the second direction and at the same time, by changing the maximum size of the elastic member in the second direction and the minimum size of the concave part in the second direction, it can achieve control of an allowable deviation amount between the first fixing member relative to the second fixing member in the second direction, that is, control and adjustment of the mounting error, so that the overall reliability can be improved.

In some embodiments, when the elastic member is in a compressed state, a maximum size of the elastic member in the first direction is larger than an inward-concaving depth of the concave part, and the moving plate is arranged to be spaced apart from the first fixing member.

In the embodiments of the present application, when the moving plate and the first fixing member move relative to each other in the second direction, the resistance thereof can be reduced and the mounting feeling can be improved. At the same time, it can also avoid the contact wear between the moving plate and the first fixing member, reduce the loss thereof, and improve the service life of the connecting device.

In some embodiments, at least a portion of an outer surface of the elastic member is an arc-shaped face, so that the elastic member is able to roll in the concave part in the second direction.

In the embodiments of the present application, at least a portion of the outer surface of the elastic member is formed as the arc-shaped face, so that the elastic member can roll in the concave part, thereby reducing the frictional force between the elastic member and the first fixing member and/or the moving plate, and facilitating the first fixing member and the second fixing member moving relative to each other in the second direction.

In some embodiments, the first fixing member and/or the moving plate includes a central axis extending in the first direction, and a plurality of concave parts are provided and symmetrically arranged around the central axis.

In the embodiments of the present application, the plurality of concave parts are symmetrically arranged around the central axis, so as to ensure that the first fixing member and the second fixing member can maintain the relative balance after mounting, thereby improving the stability of the connecting device.

In some embodiments, the connecting device further includes a position-restricting assembly fixedly connected to one of the moving plate and the first fixing member and movable relative to the other one of the moving plate and the first fixing member within a predetermined range in the first direction.

In the embodiments of the present application, the position-restricting assembly can be arranged, so as to limit the maximum movement distance between the first fixing member and the second fixing member, avoid the phenomenon of the elastic member separating from the concave part, and ensure the elastic part to be located in the same position.

In some embodiments, the position-restricting assembly includes a first position-restricting member and position-restricting connecting members connected to two sides of the first position-restricting member respectively. The first position-restricting member is connected to the first fixing member through the position-restricting connecting members, and the first position-restricting member is arranged on a side of the moving plate away from the first fixing member. The first fixing member and the first position-restricting member are spaced apart by a predetermined distance in the first direction to limit a displacement amount of the moving plate relative to the first fixing member in the first direction.

In the embodiments of the present application, the first position-restricting member, the position-restricting connecting member and the first fixing member jointly form an accommodating space, and at least a portion of the moving plate is located in the accommodating space and can move relatively in the first direction in the accommodating space. In the embodiment of the present application, a distance between the first position-restricting member and the first fixing member in the first direction can be changed, so that the limitation of the displacement amount of the moving plate in the first direction can be achieved.

In some embodiments, the position-restricting assembly includes two position-restricting connecting members arranged on two sides of the first position-restricting member in the second direction respectively. The two position-restricting connecting members are spaced apart by a second predetermined distance to limit a displacement amount of the moving plate relative to the first fixing member in the second direction.

In the embodiments of the present application, the maximum movement distance of the moving plate in the first direction can be controlled by the first position-restricting member, and the maximum movement distance of the moving plate in the second direction can be controlled by the position-restricting connecting members, so that the structure can be simple and reliable, and the risk of separation between the moving plate and the first fixing member can be reduced.

In some embodiments, the first fixing member is provided with an opening penetrating through the first fixing member in the first direction and a through hole penetrating through the first fixing member in the second direction, and the through hole is communicated with the opening. The position-restricting assembly includes a second position-restricting member and a position-restricting plate arranged on the surface of the moving plate and at least partially located in the opening, and the second position-restricting member is connected to the position-restricting plate through the through hole. The second position-restricting member is movable in the through hole in the first direction, so that the moving plate and the first fixing member are movable relative to each other.

In the embodiments of the present application, the first fixing member is provided with the opening, and at least a portion of the position-restricting plate is arranged in the opening, so that the whole structure of the connecting device can be more compact. The second position-restricting member penetrates through the through hole and the position-restricting plate in the second direction to achieve the connection between the first fixing member and the position-restricting plate. At the same time, the second position-restricting member can move in the through hole in the first direction, thereby achieving the relative movement between the first fixing member and the second fixing member in the first direction.

In another aspect, embodiments of the present application provide an electricity-consuming apparatus including a mounting base, a battery and a connecting device according to any one of the embodiments as described above. One of the first fixing member and the second fixing member is fixedly connected to the mounting base, the other of the first fixing member and the second fixing member is fixedly connected to the battery, and the battery is configured to supply an electric power.

The above description is only an overview of the technical solution of the present application. In order to understand the technical means of the present application more clearly, the technical solution can be implemented according to the content of the description. In order to make the above and other purposes, features and advantages of the present application more obvious and understandable, the specific embodiments of the present application are hereby described.

### BRIEF DESCRIPTION OF THE DRAWINGS

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without the inventive labor.
Fig. 1 shows a simplified schematic view of a vehicle according to an embodiment of the present application;
Fig. 2 shows a structural schematic view of a connecting device according to an embodiment of the present application;
Fig. 3 shows an exploded structural schematic view of the connecting device shown in Fig. 2;
Fig. 4 shows a structural schematic view of the connecting device shown in Fig. 2 in another perspective;
Fig. 5 shows a structural schematic cross-sectional view in line A-A of Fig. 4;
Fig. 6 shows a schematic view of a connection structure between a first fixing member and a position-restricting assembly in a connecting device according to an embodiment of the present application;
Fig. 7 shows a structural schematic cross-sectional view in line B-B of Fig. 6; and
Fig. 8 shows an exploded structural schematic view of another connecting device according to an embodiment of the present application.

In the drawings, the drawings are not drawn to actual scale.

### Description of reference numerals:

10-battery; 20-controller; 30-motor;
1-first fixing member; 11-opening; 12-through hole;
2-second fixing member;
3-elastic connecting assembly; 31-elastic member; 32-moving plate; 321-concave part;
4-position-restricting assembly; 41-first position-restricting member; 42-position-restricting connecting member; 43-second position-restricting member; 44-position-restricting plate; 441-position-restricting hole;
X-first direction; Y-second direction; L-central axis;
L1-first predetermined distance; L2-second predetermined distance.

### DETAILED DESCRIPTION

Embodiments of the technical solutions of the present application will be described in detail below in conjunction with the drawings. The following examples are only used to illustrate the technical solution of the present application more clearly, and therefore are only examples, rather than restricting the protection scope of the present application.

Unless otherwise defined, technical terms or scientific terms used in the present disclosure should be interpreted according to common meanings thereof as commonly understood by those of ordinary skills in the art. The terms used in the text are only for the purpose of describing specific embodiments and are not intended to limit the present application. The terms "including" and "having" in the description and the claims of the present application and the above description of the drawings, and any variations thereof are intended to cover non-exclusive inclusions.

In the description of the embodiments of the present application, the technical terms "first", "second" and the like are only used to distinguish different objects and cannot be understood as indicating or implying the relative importance or implying the quantity, specific order or the primary-and-secondary relationship of the indicated technical features. In the description of the embodiments of the present application, "plurality" means two or more, unless otherwise specifically defined.

The "embodiments" referred in the present application means that specific features, structures or characteristics described in conjunction with the embodiments may be included in at least one embodiment of the present application. This word appeared in various places in the description does not necessarily refer to the same embodiment, nor is it an independent or alternative embodiment mutually exclusive with other embodiments. It is understood explicitly and implicitly by those skilled in the art that the embodiments described herein can be combined with other embodiments.

In the description of the embodiments of the present application, the term "and/or" is merely an association relationship describing associated objects, which means that there can be three types of relationships. For example, "A and/or B" can mean three cases that there is only A, there are A and B at the same time, and there is only B. In addition, the punctuation mark "/" in the present application generally indicates that the related objects of the preceding content and following content are in an "or" relationship.

In the description of the embodiments of the present application, the term "plurality" refers to two or more (including two), similarly, "a plurality of groups" refers to two or more (including two) groups, and similarly, "a plurality of sheets" refers to two or more (including two) sheets.

In the description of the present application, the technical terms "center", "longitudinal", "lateral", "length", "width", "thickness", "upper", "lower", "front", "back", "left", "right", "vertical", "horizontal", "top", "bottom", "inner", "outer", "clockwise", "counterclockwise", "axial", "radial" and "circumferential" and the like indicate the orientation or positional relationship only for the convenience of describing the present application and simplifying the description, rather than indicating or implying that the device or the element referred to must have a specific orientation, be configured and operated in a specific orientation, and therefore cannot be understood as a limitation of the present application.

In the description of the present application, unless otherwise clearly specified and limited, the technical terms "mount", "communicate", "connect", "fix" and the like should be understood in a broad sense, for example, it can be a fixed connection, a detachable connection, or an integral connection, it can be a mechanical connection, or an electrical connection, it can be a direct connection, or it can be connected indirectly through an intermediary, and it can be an internal communication of two elements or an interaction relationship between two elements. For those of ordinary skill in the art, the specific meaning of the above-mentioned terms in the present application can be understood according to specific situations.

A battery has the advantages of the high energy density, recyclable charging, safety, environmental protection and the like, and is widely used in fields of a new energy vehicle, consumer electronics, energy storage system and the like. Generally, the battery needs to be mounted on an electricity-consuming apparatus to be used together. The battery is used to supply the electric power to the electricity-consuming apparatus for working and operation of the electricity-consuming apparatus. During the process of replacing the battery on the electricity-consuming apparatus, the interface misalignment or the deviation issue can easily occur due to the interference and the error caused by long-term work, resulting in the inability of mounting and combining the battery with the electricity-consuming apparatus.

Aiming at the problem that the mounting deviation between the battery and the electricity-consuming apparatus as mentioned above is prone to occur, the embodiments of the present application provide the connecting device and the electricity-consuming apparatus. The connecting device can withstand and absorb the forces in a plurality of directions, so that the mounting reliability can be improved.

The electricity-consuming apparatus described in the embodiments of the present application includes various forms, such as a mobile phone, a portable device, a laptop, an electromobile, an electric vehicle, a ship, a spacecraft, an electric toy and an electric tool. Among them, the spacecraft includes such as an airplane, a rockets, a space shuttle and a spacecraft; the electric toys includes a fixed electric toy or a mobile electric toy, such as a game console, an electric car toy, an electric ship toy and an electric airplane toy; the electric tool includes an electric metal-cutting tool, an electric grinding tool, an electric assembling tool and an electric railway tool, such as an electric drill, an electric grinder, an electric wrench, an electric screwdriver, an electric hammer, an impact drill, a concrete vibrators and an electric planer.

A battery cell described in the embodiments of the present application is not limited to the electricity-consuming apparatus described above, but for the sake of simplicity, the following embodiments can be illustrated taking the electric vehicle as an example.

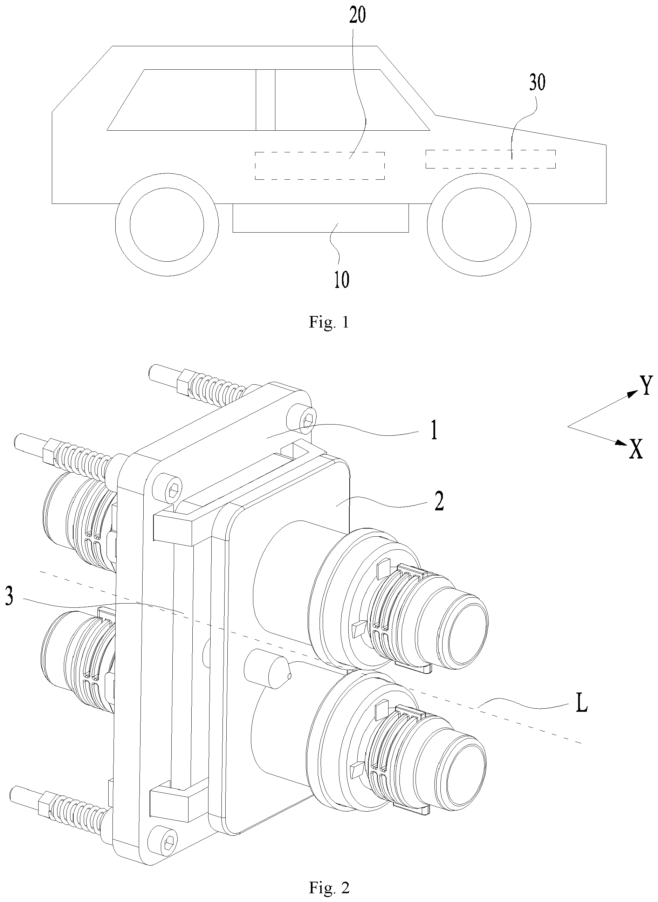

Referring to Fig. 1, the vehicle may include a fuel vehicle, a gas vehicle or a new energy vehicle which may be a pure electric vehicle, a hybrid vehicle, an extended-range vehicle and the like. A battery 10 may be arranged inside the vehicle, for example, the battery 10 may be arranged in the bottom, the front or the back of the vehicle. The battery 10 can be used to supply power to the vehicle, for example, the battery 10 can be used as an operating power source of the vehicle. The vehicle may further include a controller 20 and a motor 30, the controller 20 can be used to control the battery 10 to supply power to the motor 30. The battery can be used for, such as, starting and navigating the vehicle. Of course, the battery 10 can also be used to drive the vehicle, replacing or partially replacing the fuel or the natural gas which is provided to the vehicle for driving.

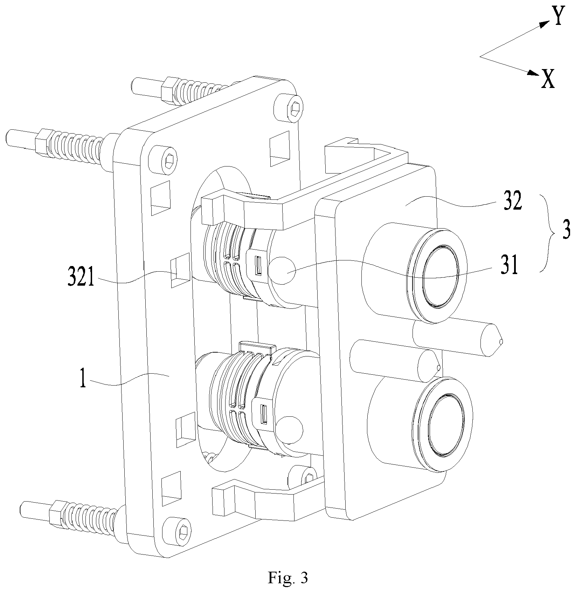

Referring to Fig. 2 to Fig. 3, embodiments of the present application provide a connecting device including a first fixing member 1, a second fixing member 2 and an elastic connecting assembly 3. The first fixing member 1 and the second fixing member 2 are configured to be fixedly connected to different devices respectively, and the first fixing member 1 is arranged to be movable relative to the second fixing member 2 through the elastic connecting assembly 3.

The elastic connecting assembly 3 includes an elastic member 31 and a moving plate 32 sandwiched between the first fixing member 1 and the second fixing member 2 in a first direction X, the second fixing member 2 is fixedly connected to the moving plate 32, at least one of the moving plate 32 and the first fixing member 1 is provided with a concave part 321 formed by concaving inward in the first direction X, and the elastic member 31 is arranged at the concave part 321. The elastic member 31 is configured to be compressible by the moving plate 32 and the first fixing member 1 in the first direction X and movable in a second direction Y, so that the first fixing member 1 is movable relative to the second fixing member 2 in the first direction X and the second direction Y, and the second direction Y is perpendicular to the first direction X.

The first fixing member 1 and the second fixing member 2 are configured to be fixedly connected to different devices respectively, so that the different devices can be connected with one another. The elastic connecting assembly 3 can be used for a floating connection between the first fixing member 1 and the second fixing member 2. Moreover, the elastic connecting assembly 3 can offset some mounting deviation and reduce the mounting difficulty when the first fixing member 1 is connected to the second fixing member 2.

The elastic connecting assembly 3 includes the elastic member 31 and the moving plate 32, the moving plate 32 is fixedly connected to the second fixing member 2, that is, the moving plate 32 and the second fixing member 2 can move synchronously. The elastic member 31 is sandwiched between the moving plate 32 and the first fixing member 1 and located in the concave part 321. The concave part 321 can be arranged on the moving plate 32 or on the first fixing member 1.

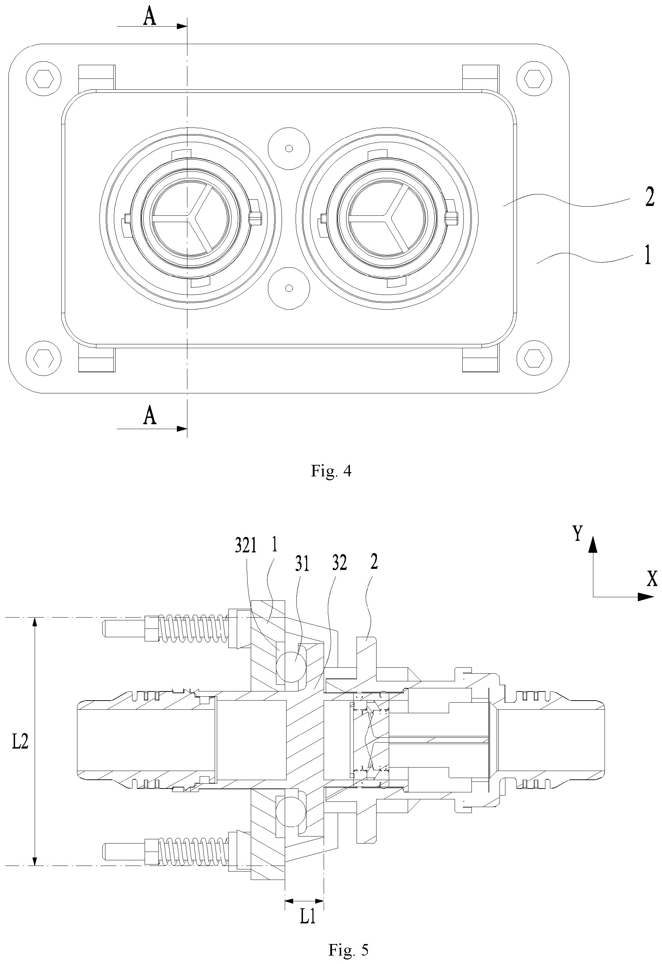

Referring to Fig. 4 and Fig. 5, embodiments of the present application are described by taking the concave parts 321 arranged on both the moving plate 32 and the first fixing member 1 as an example. In the process of mounting the first fixing member 1 and the second fixing member 2, the second fixing member 2 is connected to the first fixing member 1 through the moving plate 32, and a portion of the elastic part 31 is located in the concave part 321 of the first fixing member 1, and another portion of the elastic part 31 is located in the concave part 321 of the moving plate 32. The concave part 321 in the first fixing member 1 and the concave part 321 in the moving plate 32 can restrict the position of the elastic part 31, and can also be positioned with each other. In an initial stage of the mounting process, the elastic member 31 is in an uncompressed state, and the maximum size of the elastic member 31 in the first direction X is larger than an inward-concaving depth of the concave part 321 in the first direction X. At this time, the moving plate 32 and the first fixing member 1 are spaced apart from each other in the first direction X. As the mounting process proceeds, the elastic member 31 is in a compressed state under the action of an external force, and the first fixing member 1 and the moving plate 32 gradually approach to each other in the first direction X. At the same time, since the elastic member 31 itself can move in the second direction Y, the first fixing member 1 and the moving plate 32 can also slide relative to each other in the second direction Y. During this process, the elastic member 31 can adjust the relative position between the first fixing member 1 and the moving plate 32, and the elastic member 31 itself can also absorb the relative action force caused by the deviation between the first fixing member 1 and the moving plate 32. In other words, a certain mounting error between the first fixing member 1 and the moving plate 32 can be allowed due to the arrangement of the elastic member 31, so that the mounting reliability of the first fixing member 1 and the second fixing member 2 can be improved.

In the embodiments of the present application, the moving plate 32 and the first fixing member 1 realize the relative displacement in the first direction X and the second direction Y through the elastic member 31, and the second direction Y is perpendicular to the first direction X. The specific orientation of the second direction Y is not limited in the embodiments of the present application. It can be understood that a plurality of different second directions Y may be included, as long as the second direction Y is perpendicular to the first direction X. In this case, the first fixing member 1 can be movably arranged relative to the moving plate 32 in the plurality of directions, so that the mounting reliability can be further improved.

In addition, during the using the electricity-consuming apparatus, the electricity-consuming apparatus itself usually vibrates. The connecting device provided by the embodiments of the present application can absorb most of the external force through the elastic member 31 when the electricity-consuming apparatus vibrates, reduce the vibration amplitude of the battery and increase the service life of the battery. It should be noted that the connecting device provided in the embodiments of the present application is not only applicable to the mounting between the battery and the electricity-consuming apparatus, but also can be applied in other equipment fields, which is not limited in the present application.

Referring to Fig. 1 and Fig. 2 together, in the electricity-consuming apparatus, one of the first fixing member 1 and the second fixing member 2 is fixedly connected to the battery 10, and the other is fixedly connected to a mounting base of the electricity-consuming apparatus. The connecting device can be used to connect the battery 10 with the electricity-consuming apparatus as a whole, so that the battery 10 can continuously supply the electric power to the electricity-consuming apparatus.

The connecting device provided by the embodiments of the present application can realize the floating connection between the first fixing member 1 and the second fixing member 2 through the elastic part 31, so that the first fixing member 1 can move relative to the second fixing member 2 in the first direction X and the second direction Y. In addition, the elastic member 31 can absorb the relative force generated by the deviation between the first fixing member 1 and the moving plate 32, so that a certain mounting error between the first fixing member 1 and the moving plate 32 can be allowed, and the mounting reliability can be improved.

As shown in Fig. 5, in some embodiments, at least a portion of the elastic member 31 is located in the concave part 321, and the maximum size of the at least a portion of the elastic member 31 in the second direction Y is smaller than the minimum size of the concave part 321 in the second direction Y, such that the first fixing member 1 can move relative to the second fixing member 2 in the second direction Y.

The elastic member 31 is an elastic structure with a certain elastic restoring force, and the elastic member 31 can be compressed and deformed under the action of an external force. The embodiments of the present application does not limit the material and shape of the elastic member 31. In the uncompressed state, a portion of the elastic member 31 is located in the concave part 321, and another portion of the elastic member 31 is located in a gap between the first fixing member 1 and the moving plate 32. The at least a portion of the elastic member 31 mentioned above refers to the portion of the elastic member 31 located in the concave part 321.

In the embodiments of the present application, since the maximum size of the at least a portion of the elastic member 31 in the second direction Y is smaller than the minimum size of the concave part 321 in the second direction Y, the elastic member 31 can move in the concave part 321 in the second direction Y, so that the first fixing member 1 and the second fixing member 2 can move relative to each other in the second direction Y. It can be understood that, by changing the maximum size of the elastic member 31 in the second direction Y and the minimum size of the concave part 321 in the second direction Y, it can achieve control over an allowable amount of the deviation of the first fixing member 1 relative to the second fixing member 2 in the second direction. Optionally, the maximum size of the entire elastic member 31 in the second direction Y is smaller than the minimum size of the concave part 321 in the second direction Y.

The elastic member 31 in the embodiments of the present application can move in the concave part 321 in the second direction Y. In addition, by changing the maximum size of the elastic part 31 in the second direction Y and the minimum size of the concave part 321 in the second direction Y, it can achieve controlling the allowable deviation amount between the first fixing member 1 relative to the second fixing member 2 in the second direction, that is, controlling and adjusting the mounting error, so that the overall reliability can be improved.

In some embodiments, when the elastic member 31 is in a compressed state, the maximum size of the elastic member 31 in the first direction X is larger than an inward-concaving depth of the concave part 321, and the moving plate 32 is arranged to be spaced apart from the first fixing member 1.

It can be known from the foregoing content that the elastic member 31 can be compressed by the moving plate 32 and the first fixing member 1 in the first direction X. During the compression process, a size of the elastic member 31 in the first direction X will decrease gradually. At this time, if the maximum size of the elastic member 31 in the first direction X is still larger than an inward-concaving size of the concave part 321, it can be ensured that the moving plate 32 and the first fixing member 1 are always in a spaced state, that is, at any time, the moving plate 32 and the first fixing member 1 cannot directly contact with each other.

This design can reduce the amount of resistance subjected by the moving plate 32 and the first fixing member 1 when they move relative to each other in the second direction Y, and improve the mounting feel. At the same time, the contact wear between the moving plate 32 and the first fixing member 1 can be avoided, the loss of the moving plate 32 and the first fixing member 1 can be reduced, and the service life of the connecting device can be improved.

In some embodiments, at least a portion of an outer surface of the elastic member 31 is an arc-shaped face, so that the elastic member 31 is able to roll in the concave part 321 in the second direction Y.

Since the maximum size of the elastic member 31 in the second direction Y is smaller than the minimum size of the concave part 321 in the second direction Y, the elastic member 31 can move in the concave part 321 in the second direction Y. In the embodiments of the present application, the at least a portion of the outer surface of the elastic member 31 is formed as the arc-shaped face, so that the elastic member 31 can roll in the concave part 321, and a frictional force between the elastic member 31 and the first fixing member 1 and/or moving plate 32 can be reduced. Therefore, it is conducive to the relative movement between the first fixing member 1 and the second fixing member 2 in the second direction Y. Optionally, the elastic member 31 is a spherical structure.

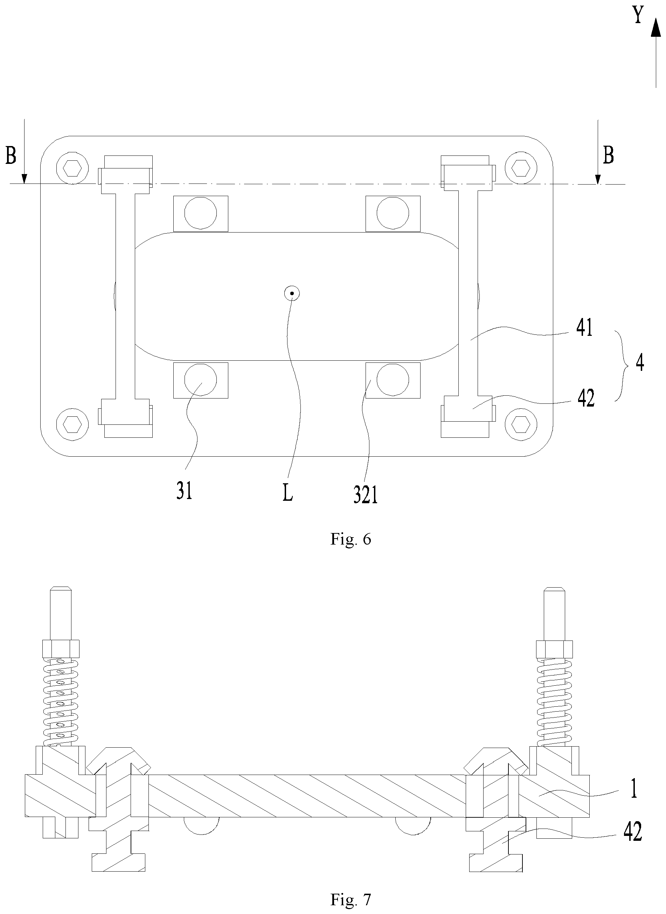

Referring to Fig. 2 and Fig. 6, in some embodiments, the first fixing member 1 and/or the moving plate 32 has a central axis L extending in the first direction X; a plurality of concave parts 321 can be provided and symmetrically arranged around the central axis L.

The first fixing member 1 and the moving plate 32 can be structures of various shapes. Exemplarily, both of the two can be plate-like structures. The second direction Y is parallel to a surface of the moving plate 32. The central axis L is a centerline of the first fixing member 1 and/or moving plate 32 and located at the center of at least one of the two. In the embodiments of the present application, the plurality of concave parts 321 are symmetrically arranged around the central axis L. Optionally, the plurality of concave parts 321 can jointly enclose and form a rectangular shape around an outside of the central axis L, or a circular shape or a polygonal shape around the outside of the central axis L, and the shape is not limited in the embodiments of the present application.

In the embodiment of the present application, the plurality of concave parts 321 are symmetrically arranged around the central axis L, so as to ensure that the first fixing member 1 and the second fixing member 2 can maintain a relative balance after being mounted, and improve the stability of the connecting device. The number of the concave parts 321 is determined according to the actual situation, which is not limited in the embodiments of the present application.

Referring to Fig. 5 and Fig. 6, in some embodiments, the connecting device further includes a position-restricting assembly 4, the position-restricting assembly 4 is fixedly connected to one of the moving plate 32 and the first fixing member 1, and movable relative to the other one of the moving plate 32 and the first fixing member 1 within a predetermined range in the first direction X.

The position-restricting assembly 4 can be used to adjust a maximum moving distance between the moving plate 32 and the first fixing member 1, that is, to adjust a maximum moving distance between the first fixing member 1 and the second fixing member 2. The position-restricting assembly 4 and one of the moving plate 32 and the first fixing member 1 can move in the first direction X within a predetermined range. A movable distance range is determined by the size of the concave part 321 in the first direction X and the size of the elastic member 31 in the first direction X. Specifically, when the position-restricting assembly 4 needs to ensure that the moving plate 32 is at a maximum spacing distance from the first fixing member 1, at least a portion of the elastic member 31 can still be located in the concave part 321, thereby preventing the elastic member 31 from detaching from the concave part 321 during operation.

In the embodiments of the present application, the position-restricting assembly 4 is provided to define the maximum moving distance between the first fixing member 1 and the second fixing member 2, and it can also prevent the elastic part 31 from detaching from the concave part 321 to ensure that the elastic part 31 can be in the same position all the time.

As shown in Fig. 5 and Fig. 6, in some embodiments, the position-restricting assembly 4 includes a first position-restricting member 41 and position-restricting connecting members 42 connected to two sides of the first position-restricting member 41 respectively. The first position-restricting member 41 is connected to the first fixing member 1 through the position-restricting connecting members 42, and the first position-restricting member 41 is arranged on a side of the moving plate 32 away from the first fixing member 1. The first fixing member 1 and the first position-restricting member 41 are spaced apart by a first predetermined distance L1 in the first direction X to limit a displacement amount of the moving plate 32 relative to the first fixing member 1 in the first direction X.

An extending direction of the first position-restricting member 41 is parallel to a surface of the first fixing member 1 facing the moving plate 32, and optionally, the first position-restricting member 41 extends in the second direction Y. The first position-restricting member 41 is fixed to the first fixing member 1 through the position-restricting connecting members 42. Exemplarily, the first fixing member 1 includes insertion holes formed by penetrating through the first fixing member 1 in the first direction X, and the position-restricting connecting members 42 are inserted into the insertion holes and fixed to the first fixing member 1. The connection between the first fixing member 1 and the position-restricting assembly 4 can adopt the structure shown in Fig. 7 that the position-restricting connecting members 42 are inserted and connected into the insertion holes. Other connection modes may be adopted, which are not limited in the present application.

In the embodiment of the present application, the first position-restricting member 41, the position-restricting connecting member 42 and the first fixing member 1 jointly form an accommodation space. At least a portion of the moving plate 32 is located in the accommodation space and can move relatively in the accommodation space in the first direction X. In the embodiment of the present application, by changing the distance between the first position-restricting member 41 and the first fixing member 1 in the first direction X, the displacement amount of the moving plate 32 in the first direction X can be limited.

Referring to Fig. 5 and Fig. 6, in some embodiments, the position-restricting assembly 4 includes two position-restricting connecting members 42 arranged on two sides of the first position-restricting member 41 in the second direction X respectively, and the two position-restricting connecting members 42 are spaced apart by a second predetermined distance L2 to limit a displacement amount of the moving plate 32 relative to the first fixing member 1 in the second direction Y.

The position-restricting connecting members 42 can be used to fixedly connect the first position-restricting member 41 with the first fixing member 1. The two position-restricting connecting members 42 are arranged side by side in the second direction Y. Since the distance between the two position-restricting connecting members 42 in the second direction Y is larger than the size of the moving plate 32 in the second direction Y, the moving plate 32 can not only move relative to the first fixing member 1 in the first direction X, but also move relative to the first fixing member 1 in the second direction Y. The displacement amount of the moving plate 32 relative to the first fixing member 1 in the second direction Y can be determined by the distance between the two position-restricting connecting members 42 in the second direction Y.

In the embodiments of the present application, the first position-restricting member 41 can be used to control the maximum moving distance of the moving plate 32 in the first direction X, and the position-restricting connecting members 42 can be used to control the maximum moving distance of the moving plate 32 in the second direction Y. Therefore, the structure is simple and reliable, and at the same time, the risk of separation between the moving plate 32 and the first fixing member 1 can be reduced.

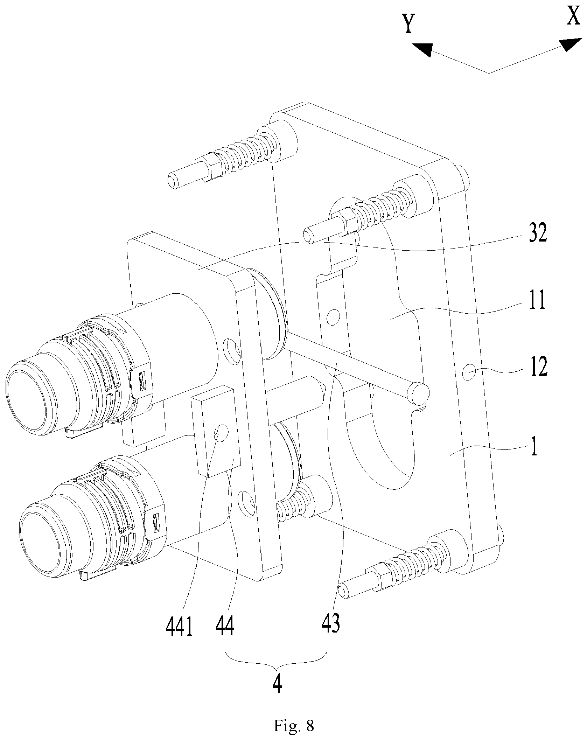

Referring to Fig. 8, in some embodiments, the first fixing member 1 is provided with an opening 11 penetrating through the first fixing member 1 in the first direction X and a through hole 12 penetrating through the first fixing member 1 in the second direction Y, and the through hole 12 is communicated with the opening 11. The position-restricting assembly 4 includes a second position-restricting member 43 and a position-restricting plate 44 arranged on the surface of the moving plate 32 and at least partially located in the opening 11, and the second position-restricting member 43 is connected to the position-restricting plate 44 through the through hole 12. The second position-restricting member 43 is movable in the first direction X in the through hole 12, so that the moving plate 32 and the first fixing member 1 are movable relative to each other.

The moving plate 32 is located on a side of the first fixing member 1 in the first direction X. The position-restricting plate 44 is located on the surface of the moving plate 32 close to the first fixing member 1, extends in the first direction X and partially enters into the opening 11. The second position-restricting member 43 in the position-restricting assembly 4 can be inserted into the through hole 12 in the second direction Y and pass through a position-restricting hole 441 located in the position-restricting plate 44, so as to connect the position-restricting plate 44 with the first fixing member 1. At the same time, the second position-restricting member 43 can also move in the through hole 12 in the first direction X, so that the moving plate 32 and the first fixing member 1 can move relative to each other in the first direction X.

In the embodiments of the present application, the first fixing member 1 is provided with the opening 11, and at least a portion of the position-restricting plate 44 is arranged in the opening 11, so that the overall structure of the connecting device can be more compact. The second position-restricting member 43 passes through the through hole 12 and the position-restricting plate 44 in the second direction Y to realize the connection between the first fixing member 1 and the position-restricting plate 44. At the same time, the second position-restricting member 43 can move in the through hole 12 in the first direction X, so as to realize the relative movement between the first fixing member 1 and the moving plate 32 in the first direction X.

In addition, embodiments of the present application further provide an electricity-consuming apparatus including a mounting base, a battery and a connecting device according to any one of the embodiments as described above. One of the first fixing member and the second fixing member is fixedly connected to the mounting base, the other of the first fixing member and the second fixing member is fixedly connected to the battery, and the battery is configured to supply an electric power.

It can be understood that the electricity-consuming apparatus provided by the embodiments of the present application has the beneficial effects of the connecting device provided by the embodiments of the present application. Please refer to the specific description of the connecting device in the above-mentioned embodiments for details, which will not be repeated in this embodiment.

Finally, it should be noted that the above embodiments are only used to illustrate the technical solutions of the present application and do not to restrict them; although the present application has been described in detail with reference to the various embodiments as described above, those skilled in the art should understand that they can still modify the technical solutions recited in the embodiments as described above, or equivalently replace some or all of the technical features; these modifications or substitutions do not separate the essence of the corresponding technical solutions from the scope of the technical solutions of the various embodiments of the present application, and they should all be covered within the scope of the claims and description of the present application. Especially, as long as there is no structural conflict, the various technical features mentioned in each of the embodiments can be combined in any way. The present application is not restricted to the specific embodiments disclosed in the text, but includes all technical solutions falling within the scope of the claims.

## Claims

1. A connecting device, comprising a first fixing member, a second fixing member and an elastic connecting assembly, wherein the first fixing member and the second fixing member are configured to be fixedly connected to different devices respectively, and the first fixing member is movable relative to the second fixing member through the elastic connecting assembly;
the elastic connecting assembly comprises an elastic member and a moving plate sandwiched between the first fixing member and the second fixing member in a first direction, the second fixing member is fixedly connected to the moving plate, at least one of the moving plate and the first fixing member is provided with a concave part formed by concaving inward in the first direction, and the elastic member is arranged at the concave part;
the elastic member is configured to be compressible by the moving plate and the first fixing member in the first direction and movable in a second direction, so that the first fixing member is movable relative to the second fixing member in the first direction and the second direction, and the second direction is perpendicular to the first direction.

2. The connecting device according to claim 1, wherein at least a portion of the elastic member is located in the concave part, and a maximum size of the at least a portion of the elastic member in the second direction is smaller than a minimum size of the concave part in the second direction, so that the first fixing member is movable relative to the second fixing member in the second direction.

3. The connecting device according to claim 1, wherein when the elastic member is in a compressed state, a maximum size of the elastic member in the first direction is larger than an inward-concaving depth of the concave part, so that the moving plate is arranged to be spaced apart from the first fixing member.

4. The connecting device according to claim 1, wherein at least a portion of an outer surface of the elastic member is an arc-shaped face, so that the elastic member is able to roll in the concave part in the second direction.

5. The connecting device according to claim 1, wherein the first fixing member and/or the moving plate comprises a central axis extending in the first direction, and a plurality of concave parts are provided and symmetrically arranged around the central axis.

6. The connecting device according to any one of claims 1-5, further comprising a position-restricting assembly, fixedly connected to one of the moving plate and the first fixing member, and movable relative to the other one of the moving plate and the first fixing member within a predetermined range in the first direction.

7. The connecting device according to claim 6, wherein the position-restricting assembly comprises a first position-restricting member and position-restricting connecting members connected to two sides of the first position-restricting member respectively, the first position-restricting member is connected to the first fixing member through the position-restricting connecting members, and the first position-restricting member is arranged on a side of the moving plate away from the first fixing member;
the first fixing member and the first position-restricting member are spaced apart by a first predetermined distance in the first direction to limit a displacement amount of the moving plate relative to the first fixing member in the first direction.

8. The connecting device according to claim 7, wherein the position-restricting assembly comprises two position-restricting connecting members, arranged on two sides of the first position-restricting member in the second direction respectively, and the two position-restricting connecting members are spaced apart by a second predetermined distance to limit a displacement amount of the moving plate relative to the first fixing member in the second direction.

9. The connecting device according to claim 6, wherein the first fixing member is provided with an opening penetrating through the first fixing member in the first direction and a through hole penetrating through the first fixing member in the second direction, and the through hole is communicated with the opening;
the position-restricting assembly comprises a second position-restricting member and a position-restricting plate arranged on a surface of the moving plate and at least partially located in the opening, and the second position-restricting member is connected to the position-restricting plate through the through hole;
the second position-restricting member is movable in the through hole in the first direction, so that the moving plate and the first fixing member are movable relative to each other.

10. An electricity-consuming apparatus, comprising a mounting base, a battery and a connecting device according to any one of claims 1 to 9, wherein one of the first fixing member and the second fixing member is fixedly connected to the mounting base, the other one of the first fixing member and the second fixing member is fixedly connected to the battery, and the battery is configured to supply an electric power.
